# EUROPEAN PATENT APPLICATION

(11) **EP 4 751 575 A1**
(43) Date of publication of application: **03.06.2026**
(21) Application number: 25763730.6
(22) Date of filing: 26.02.2025
(51) Int. Cl.: A23G 9/28

(54) **COLD BEVERAGE MACHINE DISCHARGE DEVICE HAVING LOCKING TRIGGER STRUCTURE, AND COLD BEVERAGE MACHINE**

(30) Priority: 29.08.2024 CN 202422118912 U
(71) Applicant: Guangdong Welly Electrical Appliances Co., Ltd., Zhongshan Guangdong 528400 (CN)
(72) Inventor: WU, Xiangan, Zhongshan, Guangdong 528400 (CN); MAI, Linjun, Zhongshan, Guangdong 528400 (CN); MA, Yangyang, Zhongshan, Guangdong 528400 (CN); HU, Wenzhan, Zhongshan, Guangdong 528400 (CN)
(74) Representative: HGF
(86) International application number: PCT/CN2025/079267
(87) International publication number: WO 2026/045181

(57) **Abstract**

A frozen drink machine discharge device with a locking trigger structure and a frozen drink machine are provided. The frozen drink machine discharge device includes a housing and a discharge tray. The housing is provided with a first discharge port, the discharge tray is provided with a second discharge port, and the discharge tray is installed onto the housing through an engagement structure. The housing is provided with a micro switch at the top of the first discharge port, the engagement structure is configured to detachably lock the discharge tray and the housing, and the first discharge port is in communication with the second discharge port. The second discharge port is used to discharge ice cream or a smoothie. After the discharge tray is installed, the micro switch can detect in real time whether the discharge tray is correctly and firmly locked on the housing. In response to recognizing that the discharge tray is in a locked state, the micro switch switches on the circuit, so that the frozen drink machine can perform the discharging operation normally, thereby avoiding accidental leakage or apparatus damage caused by unlocking, greatly improving the safety of operation, and solving the problem of low efficiency and high error rate of conventional technology in which the staff judges the locking state of the discharge tray by experience.

## Description

### TECHNICAL FIELD

This application relates to the technical field of frozen drink machines, specifically a frozen drink machine discharge device with a locking trigger structure and a frozen drink machine.

### BACKGROUND

Frozen drink machines generally include ice cream machines or smoothie machines, which are used to make finished ice cream or smoothie products. In designing traditional frozen drink machines, discharging efficiency and taste control are often focused on, but the comprehensive consideration of safety is ignored. This leads to the lack of effective technical means for many models to detect the locking state of the discharge tray. When replacing the discharge tray, the staff can only rely on subjective judgment or experience to confirm the locking state of the discharge tray. This judgment method is not only inefficient, but also sometimes results in misjudgment.

Due to the lack of or insufficiency of the locking state detection of the discharge tray, once the staff starts the discharging operation without confirming the locking state, it is very likely to cause accidental leakage of ice cream or smoothie. Leaking ice cream or smoothie will not only cause waste of raw materials, but also pollute the internal structure of the frozen drink machine, affecting the quality of subsequent products.

### SUMMARY

Given the above defects, it is proposed, according to the present application, a frozen drink machine discharge device with a locking trigger structure and a frozen drink machine, with which, after a discharge tray is installed, a micro switch can detect in real time whether the discharge tray is correctly and firmly locked on a housing. In response to recognizing that the discharge tray is in a locked state, the micro switch switches on a circuit, so that the frozen drink machine can perform the discharging operation normally, thereby avoiding accidental leakage or apparatus damage caused by unlocking, greatly improving the safety of operation, and solving the problem of low efficiency and high error rate of conventional technology in which the staff judges the locking state of the discharge tray by experience.

To achieve this objective, the following technical solutions are adopted in the present application:
A frozen drink machine discharge device with a locking trigger structure includes a housing and a discharge tray. The housing is provided with a first discharge port, the discharge tray is provided with a second discharge port, and the discharge tray is installed onto the housing through an engagement structure. The housing is provided with a micro switch at the top of the first discharge port. The engagement structure is configured to detachably lock the discharge tray and the housing. The discharge tray is configured to seal the first discharge port, and the micro switch is configured to identify whether the discharge tray is locked and to switch on and off a circuit. The first discharge port is in communication with the second discharge port, and the second discharge port is used to discharge ice cream or smoothie.

The housing is provided with an annular groove at the first discharge port, the annular groove is arranged around the first discharge port, the discharge tray is provided with a circular ring on one side close to the housing, and the circular ring is movably inserted into the annular groove. The engagement structure includes a first engagement block and a second engagement block. Multiple first engagement blocks are arranged around a side wall of the annular groove, multiple second engagement blocks are arranged around a side wall of the circular ring, and the first engagement blocks and the second engagement blocks are in one-to-one correspondence and are engaged, respectively.

The micro switch includes a spring piece, a first positioning block, a second positioning block, and a sensor. The first positioning block is mounted on a side wall of the annular groove, and the second positioning block is mounted on the circular ring. The first positioning block and the second positioning block are in correspondence and are engaged. The annular groove is provided with a positioning hole in the first positioning block, and the sensor is installed on the top of the positioning hole of the housing. A mounting end of the spring piece is installed on the sensor, a movable end of the spring piece is movably inserted into the positioning hole, and the second positioning block movably passes through the positioning hole and abuts against the spring piece upward.

The spring piece includes an inclined portion and an abutting portion, the inclined portion is obliquely connected to the sensor and the abutting portion, and the abutting portion is arranged to movably enter the positioning hole.

The first positioning block includes a guide portion and a positioning portion, and the guide portion and the positioning portion are arranged around the positioning hole. One end of the positioning portion is connected to an inner wall of the annular groove, the other end of the positioning portion is perpendicularly connected to the guide portion, and the length direction of the positioning portion is consistent with the axial direction of the first discharge port.

The first engagement block includes a first vertical portion and a first horizontal portion which are perpendicular to each other. The end of the first vertical portion away from the first horizontal portion is connected to an inner wall of the annular groove, and the first horizontal portion is flush with an outer surface of the housing. The second engagement block includes a second vertical portion and a second horizontal portion which are perpendicular to each other. The end of the second vertical portion away from the second horizontal portion is connected to an inner wall of the discharge tray, and the first horizontal portion is flush with an end of the circular ring. The length direction of the first vertical portion and the length direction of the second vertical portion are consistent with the axial direction of the first discharge port.

The second horizontal portion is provided with two second inclined sub-portions and a concave sub-portion on a side close to the first horizontal portion, and the two ends of the concave sub-portion are respectively connected to the two second inclined sub-portions. The first horizontal portion is provided with two first inclined sub-portions and a convex sub-portion on a side close to the second horizontal portion, and two ends of the convex sub-portion are respectively connected to the two first inclined sub-portions. The concave sub-portion is engaged with the convex sub-portion, and the first inclined sub-portions and the second inclined sub-portions are mutually abutted, respectively.

The second horizontal portion of the second engagement block is arranged close to a second vertical portion of an adjacent second engagement block, and the first horizontal portion of the first engagement block is arranged close to a first vertical portion of an adjacent first engagement block.

In another aspect, a frozen drink machine, equipped with the frozen drink machine discharge device with the locking trigger structure as described in any one of the above.

Through the technical solution of the present application, the following beneficial effects may be achieved.
1. After the discharge tray is installed, the micro switch can detect in real time whether the discharge tray is correctly and firmly locked on the housing. In response to recognizing that the discharge tray is in a locked state, the micro switch switches on the circuit, so that the frozen drink machine can perform the discharging operation normally, thereby avoiding accidental leakage or apparatus damage caused by unlocking, greatly improving the safety of operation, and solving the problem of low efficiency and high error rate of conventional technology in which the staff judges the locking state of the discharge tray by experience.
2. The circular ring is movably inserted into the annular groove, a precise guiding and positioning mechanism for the engagement process of the discharge tray and the housing can be provided, ensuring that the discharge tray can be accurately aligned with the first discharge port during installation.

### BRIEF DESCRIPTION OF DRAWINGS

FIG. 1 is a schematic diagram of a discharge device according to an embodiment of the present application;
FIG. 2 is a schematic diagram of a discharge device according to an embodiment of the present application;
FIG. 3 is a schematic diagram of a housing according to an embodiment of the present application;
FIG. 4 is an exploded view of a discharge device according to an embodiment of the present application;
FIG. 5 is an enlarged view of part A in FIG. 4;
FIG. 6 is a schematic diagram of a housing according to an embodiment of the present application;
FIG. 7 is an enlarged view of part B in FIG. 7; and
FIG. 8 is a schematic diagram of a spring piece according to an embodiment of the present application;

### Reference numerals list:

1 housing
11 first discharge port
12 annular groove
2 discharge tray
21 second discharge port
22 circular ring
31 spring piece
32 first positioning block
321 guide portion
322 positioning portion
3 second positioning block
34 sensor
35 inclined portion
36 abutment portion
37 positioning hole
41 first engagement block
42 second engagement block
43 first vertical portion
44 first horizontal portion
45 second vertical portion
46 second horizontal portion
47 second inclined sub-portion
48 concave sub-portion
49 first inclined sub-portion
50 convex sub-portion

### DETAILED DESCRIPTION

The technical solution of the present application is further explained hereinafter in conjunction with the drawings and through embodiments.

In the description of the present application, it should be understood that positions or positional relationships indicated by the terms "length", "middle", "upper", "lower", "left", "right", "top", "bottom", etc., are based on the positions or positional relationships shown in the attached drawings, and are only for the convenience of describing the present application and simplifying the description, rather than indicating or implying that the device or element referred to must have a specific position, or be constructed and operated in a specific position, and therefore cannot be understood as a limitation on the present application.

In addition, the terms "first" and "second" are only used for descriptive purposes, and cannot be understood as indicating or implying relative importance or implicitly indicating the number of technical features indicated. Therefore, the features defined as "first" and "second" may explicitly or implicitly include one or more of the features. In the description of the present application, unless otherwise specified, "multiple" means more than two.

In the description of the present application, it should be noted that, unless otherwise clearly specified and limited, the terms "installation", "splicing" and "connection" should be understood in a broad sense, for example, it can be a fixed connection, a detachable connection, or an integral connection; it can be a direct connection, or an indirect connection through an intermediate medium, or it can be an internal connection between two components. For the person of ordinary skills in the art, the specific meanings of the above terms in the present application can be understood according to the specific situation.

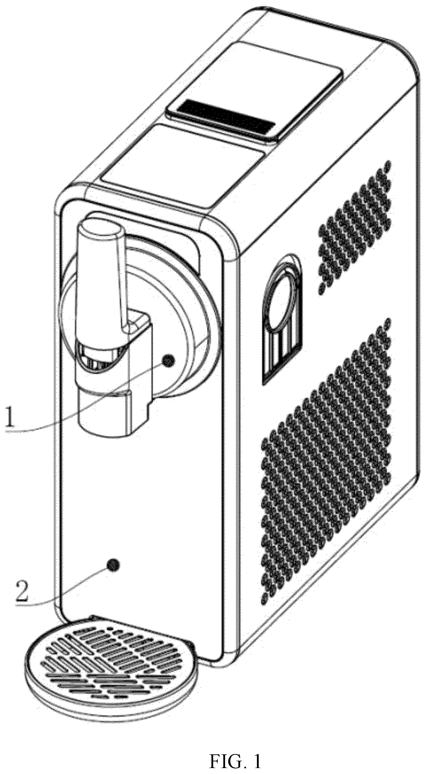

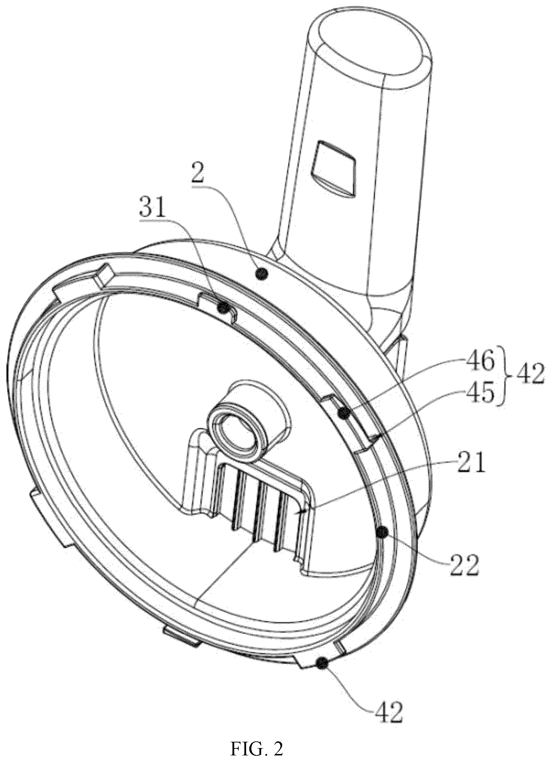

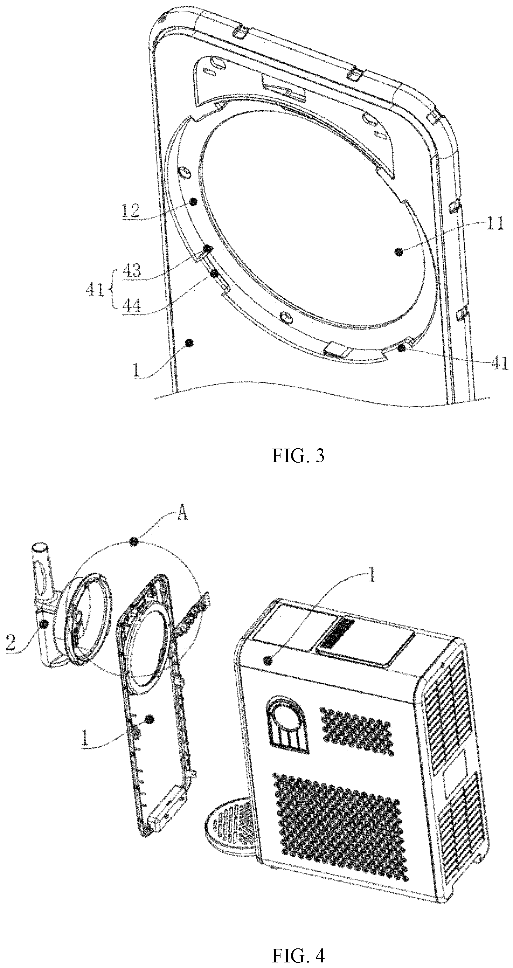

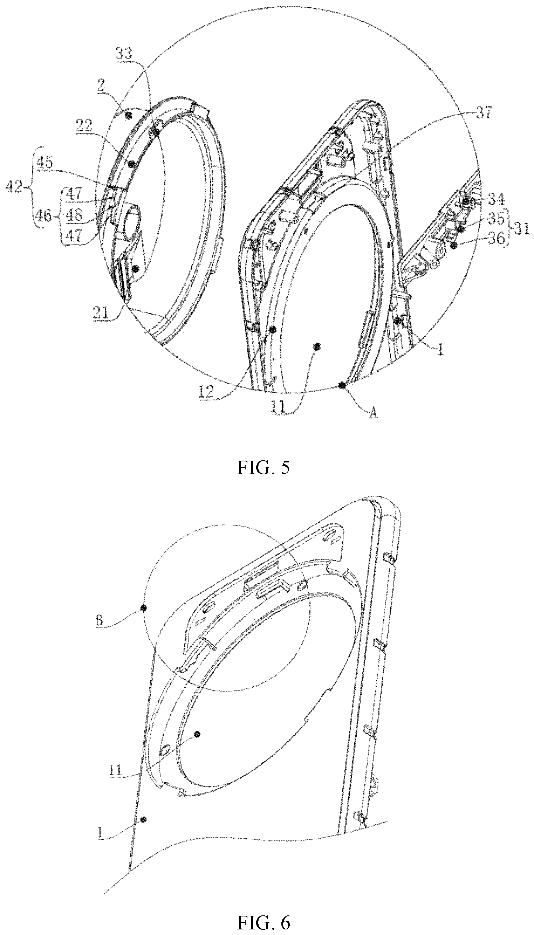

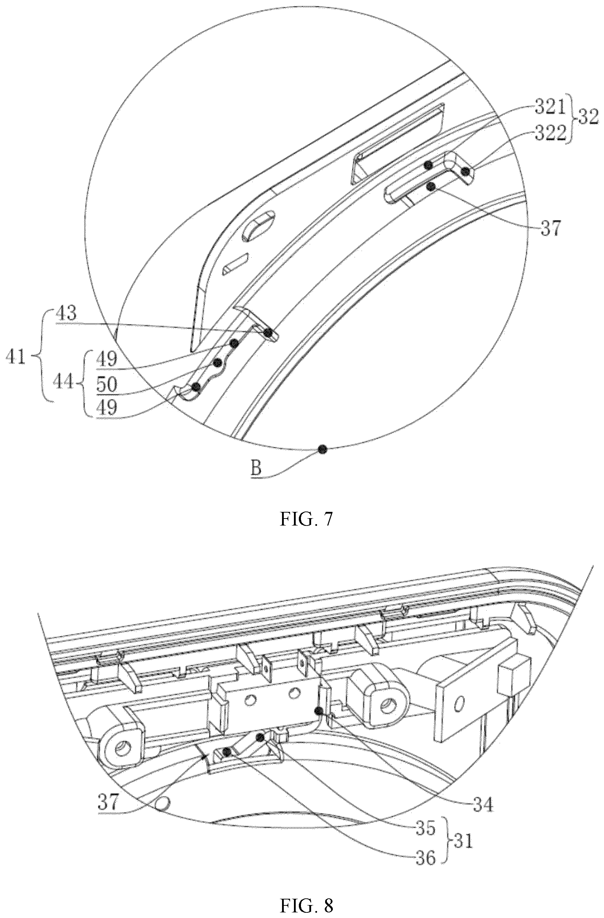

A frozen drink machine discharge device with a locking trigger structure in each embodiment of the present application is described hereinafter in conjunction with FIG. 1 to FIG. 8.

### Embodiment One

A frozen drink machine discharge device with a locking trigger structure includes a housing 1 and a discharge tray 2. The housing 1 is provided with a first discharge port 11, the discharge tray 2 is provided with a second discharge port 21, and the discharge tray 2 is installed onto the housing 1 through an engagement structure. The housing 1 is provided with a micro switch at the top of the first discharge port 11, the engagement structure is configured to detachably lock the discharge tray 2 and the housing 1, the discharge tray 2 is configured to seal the first discharge port 11, and the micro switch is configured to identify whether the discharge tray 2 is locked and to switch on and off a circuit.

The first discharge port 11 is in communication with the second discharge port 21, and the second discharge port 21 is used to discharge ice cream or smoothie.

In this solution, a frozen drink machine discharge device with a locking trigger structure is detachably installed onto the housing 1 through an engagement structure, so that the discharge tray 2 can open or seal the first discharge port 11. When the discharge tray 2 seals the first discharge port 11, it can prevent the quality of ice cream or smoothie from being degraded due to external environmental influences (such as temperature fluctuations and dust intrusion) in the process of production or storage. The engagement structure enables the discharge tray 2 to be easily disassembled or installed, simplifying the cleaning and maintenance process of the frozen drink machine discharge device.

After the discharge tray 2 is installed, the micro switch can detect in real time whether the discharge tray 2 is correctly and firmly locked on the housing 1. In response to recognizing that the discharge tray 2 is in the locked state, the micro switch switches on the circuit, allowing the frozen drink machine to perform the discharging operation normally, thereby avoiding accidental leakage or apparatus damage caused by unlocking, greatly improving the safety of operation, and solving the problem of low efficiency and high error rate of traditional technology in which the staff judges the locking state of the discharge tray 2 based on experience.

The housing 1 is provided with an annular groove 12 at the first discharge port 11, and the annular groove 12 is arranged around the first discharge port 11. The discharge tray 2 is provided with a circular ring 22 on one side close to the housing 1, and the circular ring 22 is movably inserted into the annular groove 12.

The engagement structure includes a first engagement block 41 and a second engagement block 42. Multiple first engagement blocks 41 are arranged around a side wall of the annular groove 12, and multiple second engagement blocks 42 are arranged around a side wall of the circular ring 22, and the first engagement blocks 41 and the second engagement blocks 42 are in one-to-one correspondence and are engaged, respectively.

It is worth noting that the circular ring 22 is movably inserted into the annular groove 12, a precise guiding and positioning mechanism for the engagement process of the discharge tray 2 and the housing 1 can be provided, ensuring that the discharge tray 2 can be accurately aligned with the first discharge port 11 during installation. Moreover, the one-to-one correspondence and mutual engagement between the first engagement blocks 41 and the second engagement blocks 42 form a strong locking force, effectively preventing the discharge tray 2 from loosening or falling off during use, thereby greatly enhancing the stability and reliability of the connection.

The micro switch includes a spring piece 31, a first positioning block 32, a second positioning block 33, and a sensor 34. The first positioning block 32 is mounted on the side wall of the annular groove 12, and the second positioning block 33 is mounted on the circular ring 22. The first positioning block 32 and the second positioning block 33 are in correspondence and are engaged. The annular groove 12 is provided with a positioning hole 37 in the first positioning block. The sensor 34 is installed on the top of the positioning hole 37 of the housing 1. A mounting end of the spring piece 31 is installed on the sensor 34. A movable end of the spring piece 31 is movably inserted into the positioning hole 37. The second positioning block 33 movably passes through the positioning hole 37 and abuts against the spring piece 31 upward.

In a case where the first engagement blocks 41 and the second engagement blocks 42 are engaged, respectively, the first positioning block 32 and the second positioning block 33 are engaged, and the top of the second positioning block 33 abuts against the spring piece 31, so that the spring piece 31 is subjected to an external force, the sensor 34 senses the slightly deformation of the spring piece 31, and switches on the circuit. The discharge tray 2 is rotated in the opposite direction, so that the first positioning block 32 and the second positioning block 33 are separated from each other. At this time, the spring piece 31 is not subjected to the force from the second positioning block 33, and the sensor recognizes the signal and switches off the circuit.

It is worth noting that the spring piece 31 structure has good elasticity and recovery, and can maintain stable performance after multiple uses, ensuring that the sensor 34 can switch on or off the circuit in time. Moreover, the spring piece 31 also plays a certain buffering role, reducing the damage to the apparatus caused by improper operation or external impact.

The spring piece 31 includes an inclined portion 35 and an abutting portion 36, the inclined portion 35 is obliquely connected to the sensor 34 and the abutting portion 36, and the abutting portion 36 is arranged to movably enter the positioning hole 37.

When the abutting portion 36 is subjected to an external force, the inclined portion 35 can generate a certain elastic deformation, so that the sensor 34 can more accurately sense the slight deformation of the abutting portion 36, thereby judging the locking state of the discharge tray 2. When the discharge tray 2 is correctly locked, the second positioning block 33 will push the abutting portion 36 upward, so that the abutting portion 36 and the inclined portion 35 are deformed, and the sensor 34 can accurately capture this state change, avoiding the error that may be caused by the traditional subjective judgment method.

Through the cooperation of the spring piece 31, the second positioning block 33, and the sensor 34, automatic detection is realized. The staff no longer needs to perform tedious manual inspection or rely on experienced judgment, which reduces the error rate caused by human factors.

The first positioning block 32 includes a guide portion 321 and a positioning portion 322. The guide portion 321 and the positioning portion 322 are arranged around the positioning hole 37. One end of the positioning portion 322 is connected to an inner wall of the annular groove 12, and the other end of the positioning portion 322 is perpendicularly connected to the guide portion 321. The length direction of the positioning portion 322 is consistent with the axial direction of the first discharge port 11.

The discharge tray 2 is rotated, and the discharge tray 2 drives the second positioning block 33 to rotate, so that the second positioning block 33 abuts against the positioning portion 322 by the guidance of the guide portion 321, to allow the second positioning block 33 to be located in the positioning hole 37 to presses upward against the abutting portion 36. Moreover, the guide portion 321 has a good guiding effect, reducing the impact and wear caused by direct hard contact, and effectively extending the service life of the first positioning block 32.

The first engagement block 41 includes a first vertical portion 43 and a first horizontal portion 44 which are perpendicular to each other. The end of the first vertical portion 43 away from the first horizontal portion 44 is connected to the inner wall of the annular groove 12, and the first horizontal portion 44 is flush with the outer surface of the housing.

The second engagement block 42 includes a second vertical portion 45 and a second horizontal portion 46 which are perpendicular to each other. The end of the second vertical portion 45 away from the second horizontal portion 46 is connected to an inner wall of the discharge tray 2, and the first horizontal portion 44 is flush with the end of the circular ring 22.

The length directions of the first vertical portion 43 and the second vertical portion 45 are consistent with the axial direction of the first discharge port 11.

The first engagement block 41 and the second engagement block 42 are both L-shaped structures, which can increase the strength and hardness of the circular ring 22 and the annular groove 12. The first vertical portion 43 is firmly connected to the inner wall of the annular groove 12, and the second vertical portion 45 is firmly installed on the inner wall of the discharge tray 2, which can ensure that the first engagement block 41 and the second engagement block 42 are not likely to loosen or fall off when subjected to force. The first horizontal portion 44 is flush with the outer surface of the housing, and the second horizontal portion 46 is flush with the end of the circular ring 22, which can further enhance the strength and stability of the connection, making the connection between the housing 1 and the discharge tray 2 more stable and reliable, and able to withstand greater external forces and impacts.

The design of the L-shaped structure enables the first engagement block 41 and the second engagement block 42, when combined, to not only achieve preliminary fixation through the relative positioning of the first vertical portion 43 and the second vertical portion 45, but also form a more stable support surface through the mutual abutment of the first horizontal portion 44 and the second horizontal portion 46. This dual effect significantly enhances the overall stability and bearing capacity of the connection and reduces the risk of loosening or deformation caused by external forces.

Furthermore, rotating the discharge tray 2 in the opposite direction makes the first engagement block 41 and the second engagement block 42 move away from each other, so that the staff can quickly disassemble the discharge tray 2 when maintenance or replacement is required, shortening the maintenance time and improving the overall availability and operation efficiency of the apparatus.

The second horizontal portion 46 of the second engagement block 42 is arranged close to the second vertical portion 45 of the adjacent second engagement block 42.

The first horizontal portion 44 of the first engagement block 41 is arranged close to the first vertical portion 43 of the adjacent first engagement block 41.

The first engagement block 41 and the second engagement block 42 are arranged clockwise, which greatly simplifies the assembly process of the discharge tray 2. The first engagement block 41 and the second engagement block 42 can be separated simply by rotating the discharge tray 2 counterclockwise, so that the discharge tray 2 can be quickly disassembled. When the discharge tray 2 is rotated clockwise, the first engagement block can be naturally and smoothly engaged with the second engagement block without additional adjustment or alignment steps, thereby significantly improving work efficiency and reducing operation time.

### Embodiment Two

This embodiment differs from embodiment one in that: the second horizontal portion 46 is provided with second inclined sub-portions 47 and a concave sub-portion 48 on the side close to the first horizontal portion 44, and the two ends of the concave sub-portion 48 are respectively connected to the two second inclined sub-portions 47.

The first horizontal portion 44 is provided with first inclined sub-portions 49 and a convex sub-portion 50 on the side close to the second horizontal portion 46, and the two ends of the convex sub-portion 50 are respectively connected to the two first inclined sub-portions 49.

The concave sub-portion 48 is engaged with the convex sub-portion 50, and the first inclined sub-portions 49 and the second inclined sub-portions 47 are mutually abutted, respectively.

It is worth noting that the precise engagement design of the concave sub-portion 48 and the convex sub-portion 50 enables the first engagement block 41 and the second engagement block 42 to form a tighter lock, effectively preventing relative displacement caused by vibration or external force, thereby enhancing the stability and reliability of the overall structure.

The mutual abutment between each first inclined sub-portion 49 and the respective second inclined sub-portion 47 not only increases the contact area, but also guides and disperses the stress generated during the engagement process through the design of the inclination angle, effectively reducing the local stress concentration phenomenon, and prolonging the service life of the engagement structure.

When the convex sub-portion 50 is completely embedded in the concave sub-portion 48, due to the presence of the inclined sub-portions, a wedge-like locking effect is formed. This self-locking mechanism enables the engagement structure to generate greater resistance when subjected to reverse tension, further enhancing the stability of the connection.

Preferably, a frozen drink machine is equipped with a frozen drink machine discharge device with a locking trigger structure as described in any one of the above.

The technical principle of the present application is described above in combination with embodiments. These descriptions are only for explaining the principle of the present application and cannot be interpreted as limiting the protection scope of the present application in any way. Based on the explanation here, the person skilled in the art can conceive other embodiments of the present application without making creative efforts, and all these embodiments will fall within the protection scope of the present application.

## Claims

1. A frozen drink machine discharge device with a locking trigger structure, comprising a housing and a discharge tray; wherein the housing is provided with a first discharge port, the discharge tray is provided with a second discharge port, and the discharge tray is installed onto the housing through an engagement structure, the housing is provided with a micro switch at a top of the first discharge port, the engagement structure is configured to detachably lock the discharge tray and the housing, the discharge tray is configured to seal the first discharge port, and the micro switch is configured to identify whether the discharge tray is locked and to switch on and off a circuit; and
the first discharge port is in communication with the second discharge port, and the second discharge port is used to discharge ice cream or smoothie.

2. The frozen drink machine discharge device with the locking trigger structure according to claim 1, wherein the housing is provided with an annular groove at the first discharge port, the annular groove is arranged around the first discharge port, the discharge tray is provided with a circular ring on one side close to the housing, and the circular ring is movably inserted into the annular groove; and
the engagement structure comprises a first engagement block and a second engagement block, a plurality of first engagement blocks are arranged around a side wall of the annular groove, a plurality of second engagement blocks are arranged around a side wall of the circular ring, and the first engagement blocks and the second engagement blocks are in one-to-one correspondence and are engaged with each other, respectively.

3. The frozen drink machine discharge device with the locking trigger structure according to claim 1, wherein the micro switch comprises a spring piece, a first positioning block, a second positioning block, and a sensor, the first positioning block is mounted on a side wall of the annular groove, and the second positioning block is mounted on the circular ring, the first positioning block and the second positioning block are in correspondence and are engaged, the annular groove is provided with a positioning hole in the first positioning block, the sensor is installed on a top of the positioning hole of the housing, a mounting end of the spring piece is installed on the sensor, a movable end of the spring piece is movably inserted into the positioning hole, and the second positioning block movably passes through the positioning hole and abuts against the spring piece upward.

4. The frozen drink machine discharge device with the locking trigger structure according to claim 3, wherein the spring piece comprises an inclined portion and an abutting portion, the inclined portion is obliquely connected to the sensor and the abutting portion, and the abutting portion is arranged to movably enter the positioning hole.

5. The frozen drink machine discharge device with the locking trigger structure according to claim 4, wherein the first positioning block comprises a guide portion and a positioning portion, the guide portion and the positioning portion are arranged around the positioning hole, one end of the positioning portion is connected to an inner wall of the annular groove, another end of the positioning portion is perpendicularly connected to the guide portion, and a length direction of the positioning portion is consistent with an axial direction of the first discharge port.

6. The frozen drink machine discharge device with the locking trigger structure according to claim 4, wherein the first engagement block comprises a first vertical portion and a first horizontal portion which are perpendicular to each other, an end of the first vertical portion away from the first horizontal portion is connected to an inner wall of the annular groove, and the first horizontal portion is flush with an outer surface of the housing;
the second engagement block comprises a second vertical portion and a second horizontal portion which are perpendicular to each other, an end of the second vertical portion away from the second horizontal portion is connected to an inner wall of the discharge tray, and the first horizontal portion is flush with an end of the circular ring; and
a length direction of the first vertical portion and a length direction of the second vertical portion are consistent with an axial direction of the first discharge port.

7. The frozen drink machine discharge device with the locking trigger structure according to claim 6, wherein the second horizontal portion is provided with two second inclined sub-portions and a concave sub-portion on a side close to the first horizontal portion, and two ends of the concave sub-portion are respectively connected to the two second inclined sub-portions;
the first horizontal portion is provided with two first inclined sub-portions and a convex sub-portion on a side close to the second horizontal portion, and two ends of the convex sub-portion are respectively connected to the two first inclined sub-portions; and
the concave sub-portion is engaged with the convex sub-portion, and the first inclined sub-portions and the second inclined sub-portions are mutually abutted, respectively.

8. The frozen drink machine discharge device with the locking trigger structure according to claim 1, wherein
the second horizontal portion of the second engagement block is arranged close to a second vertical portion of an adjacent second engagement block; and
the first horizontal portion of the first engagement block is arranged close to a first vertical portion of an adjacent first engagement block.

9. A frozen drink machine, equipped with the frozen drink machine discharge device with the locking trigger structure according to any one of claims 1 to 8.
